# EUROPEAN PATENT APPLICATION

(11) **EP 2 247 051 A2**
(43) Date of publication of application: **03.11.2010**
(21) Application number: 10004080.7
(22) Date of filing: 16.04.2010
(51) Int. Cl.: H04L 27/26

(54) **Reducing the peak to average ratio of a multicarrier signal**

(30) Priority: 28.04.2009 EP 09005910
(71) Applicant: Siemens AG, Wittelsbacher Platz 2 80333 München (DE)
(72) Inventor: Inan, Beril, 81373 München (DE); Lee, Jeffrey, 81379 München (DE); Walewski, Joachim, 82008 Unterhaching (DE)

(57) **Abstract**

The invention describes a method for processing a multicarrier signal (MCS) constituting of a number (N) of carrier frequencies (f1, f2, f3, f4) which is transmitted from a sender (Tx) having a number of transmitters (L1, L2, L3, L4) to a receiver (Rx) via a transmission channel (TC). The sender is segmented into a number of sub-senders (Tx1, Tx2, Tx3, Tx4) by assigning at least one transmitter (L1, L2, L3, L4) to each of the sub-senders (Tx1, Tx2, Tx3, Tx4). The number (N) of carrier frequencies (f1, f2, f3, f4) is divided in a number of subsets of carrier frequencies (f1, f2, f3, f4) wherein the number of subsets corresponds to the number of sub-senders (Tx1, Tx2, Tx3, Tx4). Each subset of carrier frequencies (f1, f2, f3, f4) is assigned to a respective subsender (Tx1, Tx2, Tx3, Tx4). A subcarrier sequence (SS(f1), SS(f2), GSS(f3), SS(f4)) is generated for each subset of carrier frequencies (f1, f2, f3, f4). The number of sub-senders (Tx1, Tx2, Tx3, Tx4) is modulated by its assigned subcarrier sequence (SS(f1), SS(f2), GSS(f3), SS(f4)) for generating respective subcarrier-signals. All subcarrier-signals are received by the receiver (Rx). The receiver generates the transmitted multicarrier signal (MCS) from the received subcarrier-signals.

## Description

Method and signal processing unit for processing a multicarrier signal

The invention relates to a method and a signal processing unit for processing a multicarrier signal constituted from a number of carrier frequencies which is transmitted from a sender having a number of transmitters to a receiver via a transmission channel.

Multicarrier transmission is used extensively in broadband wired and wireless communication systems because it can be made very robust to channel degrading effects such as multipath dispersion, fading, and Doppler spread in a dispersive channel. Known multicarrier transmission schemes are orthogonal frequency division multiplexing (OFDM) and discrete multitone (DMT).

The most common problem of multicarrier transmission is the large peak-to-average power ratio (PAPR) where independently modulated subcarriers incidentally add up constrictively, leading to high peak powers in the transmitted signal. When N subcarriers add up in phase they produce a peak power that is up to N² times the average power. However, a large peak-to-average power ratio will bring disadvantages such as nonlinearity and reduced dynamic range and/or dynamic efficiency in amplifiers, digital-to-analogue converters (DACs), and analogue-to-digital converters (ADCs).

Recently, the use of multicarrier transmission in a wide range of optical systems including optical wireless communications is being investigated. Besides OFDM and DMT, subcarrier-multiplexing of analogue CATV channels (CATV = cable TV) onto optical transmitters, such as lasers for lightwave transmission of video signals over fiber, can also be considered as multicarrier transmission over an optical channel. Especially in intensity-modulated direct-detection optical communication systems, which is widely utilized in optical wireless communications, large peak-to-average power ratio values lead to an extra performance loss due to the need of a DC-bias, in order to achieve a positive unipolar signal for transmission. Therefore, the dynamic range for modulation is small.

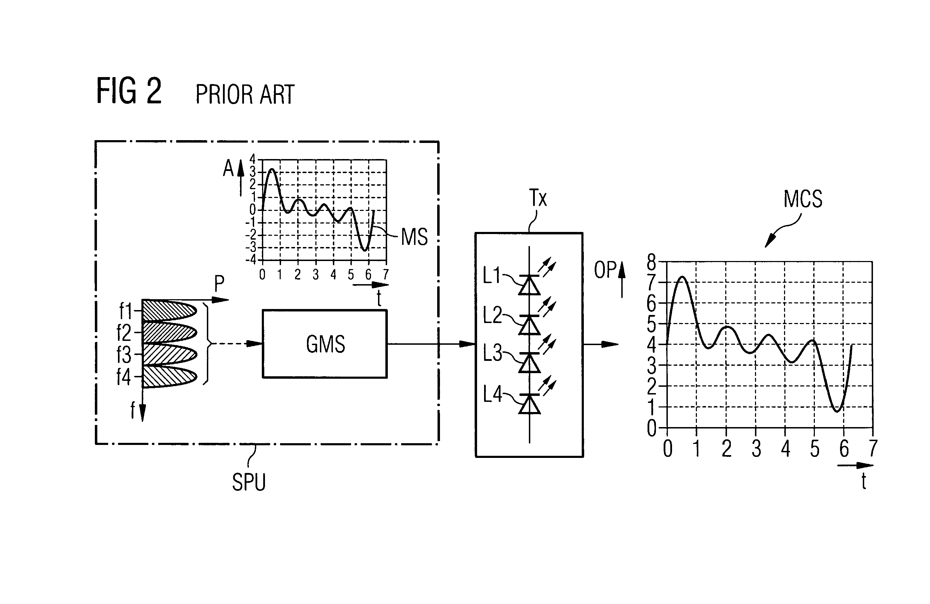

Fig. 2 shows the principle of processing a multicarrier signal according to the prior art. The transmission system comprises a sender Tx driven by a signal processing unit SPU and a receiver which is not shown in Fig. 2. The sender Tx comprises a number of transmitters. In the example shown the sender Tx comprises four transmitters L1, L2, L3, L4 in form of single light emitting diodes (LEDs). However, the sender Tx could consist of a different number of transmitters. According to the optical sender Tx the receiver is based on optical elements, too.

In the signal processing unit SPU a multicarrier sequence MS is generated by a generating means GMS from a number of carrier frequencies f1, f2, f3, f4, each of them having a specific power spectral density P. This is schematically illustrated in the graph within the signal processing unit showing the power spectral density P depending from the frequency f and the illustrated number of carrier frequencies f1, f2, f3, f4. With the help of fast fourier transformation (FFT) a subcarrier for each carrier frequency is generated. The signal processing unit SPU adds up each of the subcarriers for providing the multicarrier sequence MS which is used to modulate the transmitters L1, L2, L3, L4 of the sender Tx.

Adding of the independently modulated subcarriers may lead - as already described - to high peak powers in the multicarrier sequence GMS. This can be seen from the graph showing the amplitude A versus the time t of the multicarrier sequence MS. This multicarrier sequence MS is fed to the sender Tx where each of the transmitters L1, L2, L3, L4 is modulated with the same multicarrier sequence MS for providing the multicarrier signal MCS which can be received by the receiver. The transmitted multicarrier signal MCS is shown in the graph where an optical power OP versus time t is depicted and corresponds to the resulting optical wave transmitted by the sender Tx.

Basically, there is a need to reduce peak-to-average power ratio to reduce performance loss. In general, this can be achieved by clipping. However, clipping causes a generation of intercarrier interferences.

It is therefore an objective of the present invention to provide a method for processing a multicarrier signal constituted from a number of carrier frequencies where a transmission can be made with reduced performance loss and without the need of a DC-bias.

It is a further objective of the present invention to provide a signal processing unit for processing a multicarrier signal which allows transmission of a multicarrier signal with reduced performance loss.

Theses objectives are solved by a method according to claim 1 and a signal processing unit according to claim 9, respectively. Preferred embodiments of the invention are set out in the independent claims.

The invention provides a method for processing a multicarrier signal constituted from a number of carrier frequencies which is transmitted from a sender having a number of transmitters to a receiver via a transmission channel. The method comprises the steps of: segmenting the sender into a number of sub-senders by assigning at least one transmitter to each of the sub-senders; dividing the number of carrier frequencies in a number of subsets of carrier frequencies wherein the number of subsets corresponds to the number of sub-senders; assigning each subset of carrier frequencies to a respective sub-sender; generating a subcarrier sequence for each subset of carrier frequencies; modulating the number of sub-senders by its assigned subcarrier sequence for generating respective subcarrier-signals; and receiving all subcarrier-signals by the receiver and generating the transmitted multicarrier signal from the received subcarrier-signals.

The proposed method for processing a multicarrier signal allows the reduction of the peak power depending on the number of sub-senders that are used for transmission. At the receiver, the total signal which is produced by all sub-senders together will still be the same as when only one sender is used. The difference to the prior art is that the transmission performance will be improved due to lower peak-to-average power ratio values in each sub-sender.

According to a further embodiment each of the number of subsets of carrier frequencies comprises one carrier frequency. This preferred embodiment allows the maximum reduction of the peak power so that the transmission performance can be optimized. This embodiment requires that the number of sub-senders corresponds to the number of carrier frequencies, which is processed by a signalprocessing unit prior to modulating the number of sub-senders.

Since the splitting up of the multicarrier signal into subcarriers onto various sub-senders will lead to a decreased throughput, it is proposed that the modulation index at each sub-sender is increased to its maximum. This embodiment allows increasing the throughput. Basically, each subcarrier may be amplified so that the full amplitude may be used.

To increase the throughput, additionally or alternatively, segmenting the sender into a number of sub-senders may comprise the step of assigning more than one transmitter to at least one of the number of sub-senders. The amount of transmitters per sub-sender is dependent from the transmission channel. The amount of transmitters per sub-sender might be determined by measuring a frequency response to find out at which frequencies damping occurs. If the damping is high the more transmitters should be provided.

According to a further embodiment the step of generating the transmitted multicarrier signal from the received subcarrier-signals comprises adding the received subcarrier-signals by the receiver. To be able to reconstruct the multicarrier signal, it is therefore necessary that the receiver receives all subcarrier-signals from the amount of sub-senders.

The method according to the invention may be applied to fiber-based optical communications or wireless electromagnetic communications or wired electric communications.

The invention furthermore provides a signal processing unit for processing a multicarrier signal constituted from a number of carrier frequencies, which is transmitted from a sender having a number of transmitters to a receiver via a transmission channel. The signal processing unit comprises: a first means for segmenting the sender into a number of sub-senders by assigning at least one transmitter to each of the sub-senders; a second means for dividing the number of carrier frequencies in a number of subsets of carrier frequencies wherein the number of subsets corresponds to the number of sub-senders; a third means for assigning each subset of carrier frequencies to a respective sub-sender; a fourth means for generating a sub-carrier sequence for each subset of carrier frequencies; and a fifth means for modulating the number of sub-senders by its assigned subset of carrier frequencies for generating respective subcarrier-signals to be received by the receiver for generating the transmitted multicarrier signal from the received subcarrier-signals.

In a preferred embodiment it further drives an LED-array or an optical sender having multiple transmitters.

The invention will be described in more detail with reference to the figures.
- Fig. 1: shows the principle of the method for processing a multicarrier signal according to the invention.
- Fig. 2: shows the principle of a standard multicarrier transmission employing an emitter array as sender.

The invention will be described by reference to a wireless optical transmission system. However, the invention is not limited to a wireless optical transmission system but can also be applied to fiber-based optical communication systems and even communications on other electromagnetic waves as well as to wired electrical communications (e.g., via DSL, viz. digital subscriber line).

The invention is based on a transmission system in which a sender comprises a number of transmitters. In a transmission system based on optical communications - be it fiber-based or be it an optical point-to-point transmission - the sender could be a LED-array or consists of a multiplicity of single transmitters, e.g. LEDs or groups of LEDs.

The principle of the invention is based on segmenting the sender into a number of sub-senders, i.e. to divide the multiplicity of transmitters (LEDs) into different segments, by assigning at least one transmitter to each of the sub-senders. Each of these sub-senders or segments is modulated by a sub-N number of carriers for an N-carrier transmission system. N is the number of carrier frequencies which is, in other words divided in a number of subsets of carrier frequencies wherein the number of subsets corresponds to the number of sub-senders. After each subset of carrier frequencies is assigned to a respective sub-sender, a subcarrier sequence for each subset of carrier frequencies is generated. As a result, the subcarriers are split up onto various sub-senders, which are modulated with a respective subcarrier sequence generated from a subset of carrier frequencies. This leads to a reduced peak power depending on the number of sub-senders that are used for transmission. At the receiver, the total multicarrier signal, which is produced from all sub-senders together will still be the same compared to the prior art where all transmitters send the same information, i.e. the complete multicarrier signal. As an advantage, the transmission performance will be improved due to lower PAPR values in each sub-sender.

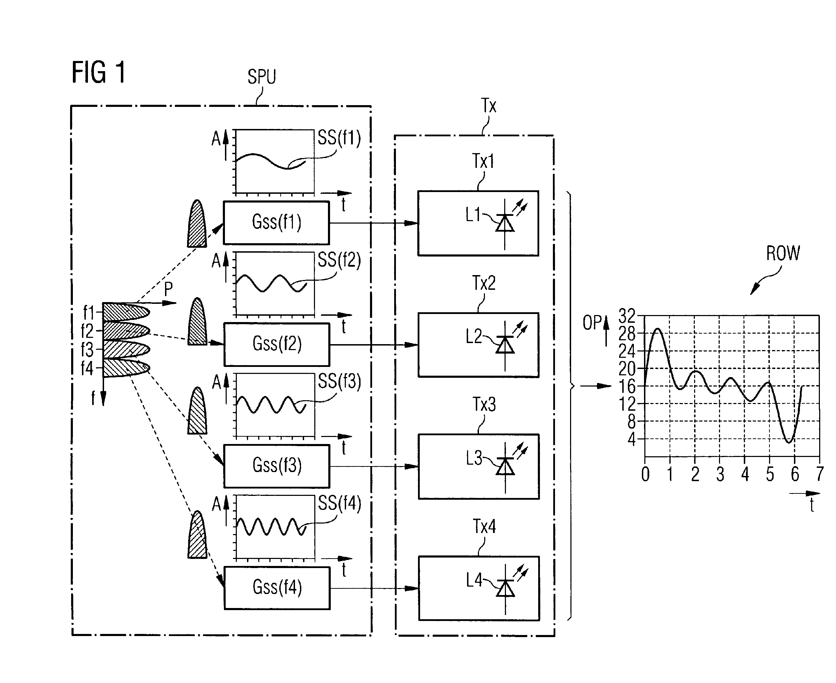

Fig. 1 illustrates the principle of the method for processing a multiple carrier signal according to the invention. The transmission system consists of the sender Tx with a number of sub-senders Tx1, Tx2, Tx3, Tx4. Each of the sub-senders Tx1, Tx2, Tx3, Tx4 comprises at least one transmitter which is represented by a single LED L1, L2, L3, L4 by way of example. Instead of modulating the sub-senders [and its transmitter(s)] with the overall multicarrier sequence the multicarrier sequence is decomposed by the signal processing unit SPU into different subcarrier sequences SS consisting of different carriers f1, f2, f3, f4. This is accomplished by generating means GSS(f1), GSS(f2), GSS(f3), GSS(f4) for generating subcarrier sequences. Each subcarrier sequence SS(f1), SS(f2), SS(f3), SS(f4) is used to modulate a respective sub-sender Tx1, Tx2, Tx3, Tx4. The overall resulting waveform received by the receiver (not shown in Fig. 2) and depicted with MCS remains the same compared to the method known from the prior art where subcarrier sequences are added up to a multicarrier sequence MCS in the signal processing unit SPU which is used for modulating the sender Tx.

In the signal processing unit SPU a number of carrier frequencies f1, f2, f3, f4, each of them having a specific power spectral density P, is provided (cf. the graph in the left showing P versus f). The subcarrier sequences SS(f1), SS(f2), SS(f3), SS(f4) from the different carrier frequencies f1, f2, f3, f4 within the signal processing unit SPU are illustrated by the graphs showing their amplitude A versus time t. For each of the carrier frequencies f1, f2, f3, f4 a subcarrier sequence SS(f1), SS(f2), SS(f3), SS(f4) is generated. However, it is to be understood that this is not necessarily the only configuration. A subcarrier sequence could be generated from a group or a couple of carrier frequencies.

The resulting optical waveform ROW can be generated from all subcarrier-signals of the number of sub-senders Tx1, Tx2, Tx3, Tx4 through adding up by the receiver. This resulting optical waveform ROW is shown in the diagram illustrating the optical power OP versus the time t.

In the example shown in Fig. 1 the multicarrier sequence is divided into four different sequences representing four different subcarriers. The PAPR value of each subcarrier sequence is lower than the overall multicarrier sequence given in Fig. 2. Thus, the dynamic range for modulation of each sub-sender is increased resulting in a larger average transmit optical power (cf. the labelling of OP in Fig. 1 compared to the labelling of OP in Fig. 2) and better performance.

Also when clipping is used to reduce the PAPR, splitting up the subcarriers according to the above described method reduces the incurred clipping noise. Furthermore, if the transfer functions of the transmitters of each sub-sender used are non-linear, the reduced PAPR leads to a reduction in the accompanying inter-carrier distortions.

Splitting up the subcarriers onto various sub-senders and transmitters, respectively, will lead to a decreased throughput. However, this can be counteracted by increasing the modulation index at each sub-sender and transmitter, respectively, or by transmitting a certain subset of subcarriers by more than one transmitter. The exact amount of compensation needed in order not to decrease the systems data throughput can be determined by known simulation tools for inferring compensation schemes.

## Claims

1. A method for processing a multicarrier signal (MCS) constituting of a number (N) of carrier frequencies (f1, f2, f3, f4) which is transmitted from a sender (Tx) having a number of transmitters (L1, L2, L3, L4) to a receiver (Rx) via a transmission channel (TC), comprising the steps of:
- segmenting the sender into a number of sub-senders (Tx1, Tx2, Tx3, Tx4) by assigning at least one transmitter (L1, L2, L3, L4) to each of the sub-senders (Tx1, Tx2, Tx3, Tx4);
- dividing the number (N) of carrier frequencies (f1, f2, f3, f4) in a number of subsets of carrier frequencies (f1, f2, f3, f4) wherein the number of subsets corresponds to the number of sub-senders (Tx1, Tx2, Tx3, Tx4);
- assigning each subset of carrier frequencies (f1, f2, f3, f4) to a respective sub-sender (Tx1, Tx2, Tx3, Tx4);
- generating a subcarrier sequence (SS(fl), SS(f2), GSS(f3), SS(f4)) for each subset of carrier frequencies (f1, f2, f3, f4);
- modulating the number of sub-senders (Tx1, Tx2, Tx3, Tx4) by its assigned subcarrier sequence (SS(fl), SS(f2), GSS(f3), SS(f4)) for generating respective subcarrier-signals; and
- receiving all subcarrier-signals by the receiver (Rx) and generating the transmitted multicarrier signal (MCS) from the received subcarrier-signals.

2. The method according to claim 1, wherein each of the number of subsets of carrier frequencies (f1, f2, f3, f4) comprises one carrier frequency.

3. The method according to claim 1 or 2, wherein the modulation index at each sub-sender (Tx1, Tx2, Tx3, Tx4) is increased to its maximum.

4. The method according to one of the preceding claims, wherein segmenting the sender (Tx) into a number of sub-senders (Tx1, Tx2, Tx3, Tx4) comprises the step of assigning more than one transmitter (L1, L2, L3, L4) to at least one of the number of sub-senders (Tx1, Tx2, Tx3, Tx4).

5. The method according to one of the preceding claims, wherein generating the transmitted multicarrier signal (MCS) from the received subcarrier-signals comprises adding the received subcarrier-signals.

6. The method according to one of claims 1 to 5, wherein it is applied to fibre-based optical communications.

7. The method according to one of claims 1 to 5, wherein it is applied to wireless electromagnetic communications.

8. The method according to one of claims 1 to 5, wherein it is applied to wired electric communications.

9. A signal processing unit (SPU) for processing a multicarrier signal (MCS) constituted from a number (N) of carrier frequencies (f1, f2, f3, f4) which is transmitted from a sender (Tx) having a number of transmitters (L1, L2, L3, L4) to a receiver (Rx) via a transmission channel (TC), comprising:
- a first means for segmenting the sender into a number of sub-senders (Tx1, Tx2, Tx3, Tx4) by assigning at least one transmitter (L1, L2, L3, L4) to each of the sub-senders (Tx1, Tx2, Tx3, Tx4);
- a second means for dividing the number (N) of carrier frequencies (f1, f2, f3, f4) in a number of subsets of carrier frequencies (f1, f2, f3, f4) wherein the number of subsets corresponds to the number of sub-senders (Tx1, Tx2, Tx3, Tx4);
- a third means for assigning each subset of carrier frequencies (f1, f2, f3, f4) to a respective sub-sender (Tx1, Tx2, Tx3, Tx4);
- a forth means for generating a subcarrier sequence (SS(f1), SS(f2), GSS(f3), SS(f4)) for each subset of carrier frequencies (f1, f2, f3, f4);
- a fifths means for modulating the number of sub-senders (Tx1, Tx2, Tx3, Tx4) by its assigned subset of carrier frequencies (f1, f2, f3, f4) for generating respective subcarrier-signals to be received by the receiver (Rx) for generating the transmitted multicarrier signal (MCS) from the received subcarrier-signals.

10. The signal processing unit according to claim 9, wherein it drives an LED-array or an optical sender having multiple transmitters.
